# EUROPÄISCHE PATENTSCHRIFT

(11) **EP 1 703 161 B1**
(45) Veröffentlichungstag und Bekanntmachung des Hinweises auf die Patenterteilung: **09.05.2007**
(21) Anmeldenummer: 05005798.3
(22) Anmeldetag: 17.03.2005
(51) Int. Cl.: F16D 23/12, F16D 23/14, G05G 9/02

(54) **Ausrückeinrichtung für eine Kraftfahrzeugkupplung**
Actuating mechanism for a vehicle clutch
Mécanisme d'actionnement pour embrayage d'un véhicule

(43) Veröffentlichungstag der Anmeldung: 20.09.2006
(73) Patentinhaber: ZF FRIEDRICHSHAFEN AG, 88046 Friedrichshafen (DE)
(72) Erfinder: Reuter, Klaus, 97723 Oberthulba (DE); Müller, Karl, 97490 Kronungen (DE); Obergfell, Ralf, 97497 Dingolshausen (DE)

(56) Entgegenhaltungen:
- DE-A1- 4 025 213
- DE-A1- 19 700 930
- GB-A- 539 689
- US-A- 3 983 983
- US-A- 5 012 911

## Beschreibung

Die Erfindung betrifft eine Ausrückeinrichtung für eine Kraftfahrzeugkupplung gemäß dem Oberbegriff des Patentanspruchs 1.

Ausrückeinrichtungen mit einem Kupplungshebel zur Übertragung einer Betätigungskraft auf einen axial verschiebbaren Ausrücker sind allgemein bekannt. Eine derartige Anordnung geht beispielsweise aus der DE 197 00 930 A1 hervor, bei der ein als Schwinge ausgebildeter Kupplungshebel mittels eines Kugelgelenks schwenkbar an einer Getriebewandung gelagert ist und auf welchen über das andere Ende einer Betätigungskraft zum Betätigen einer Reibungskupplung eingeleitet werden kann. Der dort dargestellte Kupplungshebel besitzt in dessen Längsmitte eine Ausnehmung, welche einen auf einem Führungsrohr angeordneten Ausrücker umschließt und wobei eine Anlagefläche der Schwinge an einer an dem Ausrücker ausgebildeten und zur Getriebeseite konvex vorstehend gewölbten Fläche zur Kraftübertragung anliegt.

Wenn die Schwinge zur Durchführung einer Ausrückbewegung verschwenkt wird, so kann sich einerseits der Kupplungshebel am Ausrücker abwälzen und andererseits wird bezüglich der Ausrückachse die radiale Position der gegenseitigen Kontaktstelle verschoben. Dabei kann die Ausrückkraft je nach Verschwenkungsgrad des Kupplungshebels, Einbaulage und Verschleißzustand der Kupplung in Bezug auf die Ausrückachse ober- oder untermittig am Ausrücker angreifen, wodurch auf diesen nicht nur die gewünschten Axial- sondern auch unerwünschte Querkräfte einwirken können. Letztere bewirken ein Kippmoment auf den Ausrücker, wodurch dieser mit dessen axialer Führungsfläche nur unter einer erhöhten Reibung verschieben lässt. Diese Reibungskraft muss zusätzlich zur Ausrückkraft aufgebracht werden, was sich in der Kupplungspedalkennlinie als Krafthysterese äußert und als Folgeerscheinung eine Pedalkrafterhöhung bewirkt.

Eine Ausrückeinrichtung für eine Kraftfahrzeugkupplung gemäß dem Oberbegriff des Patentanspruchs 1 wird bereits in der GB 539 689 A beschrieben, wobei der Kupplungshebel mittels einer am Fahrzeugchassis bezüglich der Ausrückachse radial verschwenkbaren Abstützung gelagert ist. Bei einer Betätigung des Kupplungshebels kann sich diese Lagerstelle verschwenken, wodurch die radiale Lage der Anlageposition des Kupplungshebels am Ausrücker beibehalten wird und auf diesen einwirkende Querkräfte eliminiert sind.

Eine weitere gattungsgemäße Ausrückeinrichtung ist mit der DE 40 25 213 A1 bekannt geworden. Dort wird vorgeschlagen, einen am Ausrücker angreifenden Betätigungsabschnitt des Kupplungshebels als relativ zum Hebel bewegliches Zwischenglied auszubilden, welches sich bei einer Kupplungsbetätigung um eine am Kupplungshebel angeordnete Drehachse verschwenken kann. Auf diese Weise wird sichergestellt, dass der Ausrücker lediglich mit Axialkräften beaufschlagt wird.

Die Erfindung stellt sich die Aufgabe, alternativ zu den bereits bekannten Ausrückeinrichtungen eine weitere Ausrückeinrichtung bereitzustellen, die bei einer Kupplungsbetätigung das Einwirken von Radialkräften auf den Ausrücker vermeidet.

Die Erfindung löst die gestellte Aufgabe mit einer gattungsgemäßen Ausrückeinrichtung mit dem im Kennzeichen des Anspruchs 1 aufgeführten Merkmalen.

Durch das Vorsehen von Ausgleichsmitteln, welche dem Ausrückhebel zumindest mittelbar zugeordnet sind und welche bei einer Verschwenkbewegung des Kupplungshebels eine Ausgleichsbewegung mit mindestens einer Radialkomponente bezüglich der Ausrückachse erzeugen, kann ein auftretender Radialversatz der Anlageposition des Kupplungshebels am Ausrücker unterbunden werden, wodurch die radiale Anlageposition am Ausrücker im Wesentlichen beibehalten werden kann. Das hat den Vorteil, dass die auf den Kupplungshebel eingeleitete Betätigungskraft in allen Phasen eines Betätigungshubs und unabhängig von Einbautoleranzen und dem Verschleißzustand vollständig axial in den Ausrücker übergeleitet werden und somit keine unerwünschte radial wirkende Kraftkomponente auftreten kann.

Durch die Ausgleichsmittel werden unmittelbar am Ausrücker wirkendenden Querbewegungsanteile an dieser kritischen Stelle eliminiert und stattdessen eine Translations- oder eine Verschwenkbewegung an einem weniger kritischen Bereich des Betätigungssystems eingeführt. Die Ausgleichsbewegung, die zum Ausgleich des Radialversatzes zumindest eine radiale Komponente aufweist, kann in definierter Weise an einer gewünschten Stelle des Kupplungshebels oder eines mit diesem unmittelbar zusammenwirkenden Bauteils ausgeführt werden. An der bevorzugten Position kann diese aufgrund einer höheren Fertigungsgüte optimiert werden, wodurch eine bei der Ausgleichsbewegung auftretende Restreibung gegenüber einer reibenden radialen Verlagerung der Anlageposition des Ausrückhebels am Ausrücker wesentlich reduziert werden kann.

Erfindungsgemäß ist vorgesehen, dass zur Darstellung des Ausgleichsmittels das zweite Lagerelement verlagerbar am Kupplungshebel angeordnet wird oder das erste und das zweite Lagerelement zueinander verschiebbar angeordnet werden oder dass als Ausgleichsmittel (38d) ein längenvariabler Kupplungshebel (22) ausgebildet wird, wodurch der Verschwenkbewegung des Kupplungshebels eine Translationsbewegung überlagert wird. Die Ausrückeinrichtung ist so ausgelegt, dass die am Ausgleichsmittel in Radialrichtung wirkenden Reibungskräfte deutlich geringer sind als die infolge eines Radialversatzes der Anlageposition des Kupplungshebels auftretenden parasitären Reibungskräfte. Durch diese Auslegung ist gewährleistet, dass die Ausgleichsmittel sicher aktiviert werden.

Bei sich während der Lebensdauer der Ausrückeinrichtung ändernden Reibverhältnissen kann es jedoch gemäß Anspruch 2 vorteilhaft sein, den Kupplungshebel mit dessen Kraftübertagungsbereich radial an der Anlageposition des Ausrückers abzustützen.

Die Erfindung wird im Folgenden anhand der beigefügten Figuren beispielhaft erläutert.
Es zeigen:
- Fig. 1: eine schematische Darstellung einer Ausrückeinrichtung mit an verschiedenen Positionen angeordneten Ausgleichsmitteln,
- Fig. 2: einen Kugelkopf aus zwei zueinander verschiebbaren Teilen,
- Fig. 3: einen Kugelkopf aus zwei zueinander verschwenkbaren Teilen,
- Fig. 4: einen Ausschnitt eines Kupplungshebels mit einer Längskalotte.

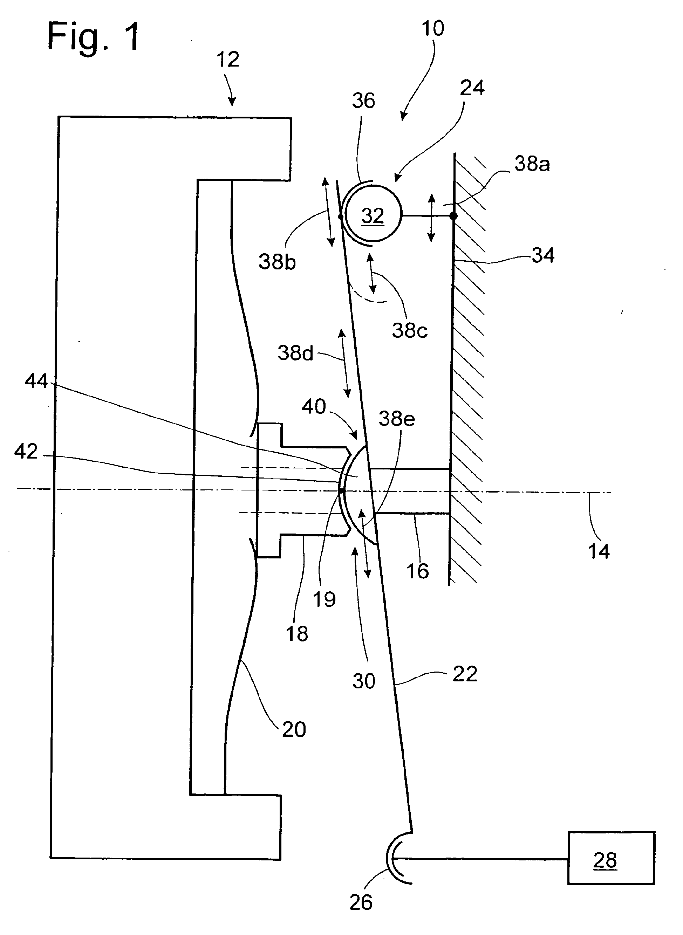

Fig. 1 stellt ein Ausrückeinrichtung 10 für eine Kraftfahrzeugreibungskupplung 12 dar und umfasst zunächst einen axial, entlang einer Ausrückachse 14 auf einem Führungsrohr 16 verschiebbaren Ausrücker 18, der zur Übertragung einer Kupplungsbetätigungskraft mit einem als Membranfeder ausgebildeten Ausrückorgan 20 der Kupplung 12 in Wirkverbindung steht. Bezugsziffer 22 bezeichnet einen um ein Kugelgelenk 24 schwenkbar gelagerten Kupplungshebel, welcher einen Kraftaufnahmebereich 26 zur Aufnahme der Kupplungsbetätigungskraft von einem Hydraulikzylinder 28 und einen Kraftübertragungsbereich 30 aufweist, der sich zur Übertragung der Kupplungsbetätigungskraft mit dem Ausrücker 18 an einer Anlageposition in Wirkverbindung befindet. Das Kugelgelenk 24 umfasst einen Kugelkopf 32 als ein erstes Lagerelement, welcher an einem Getriebegehäuse 34 des Fahrzeuges zumindest axial festgelegt ist und ein als Gelenkpfanne 36 geformtes zweites Lagerelement, welches am Kupplungshebel 22 angeordnet ist.

Zur Vermeidung einer radialen Verlagerung der Anlageposition des Ausrückhebels 22 während eines Betätigungshubes ist diesem mindestens ein Ausgleichsmittel 38a-e zugeordnet, welches eine Ausgleichsbewegung mit mindestens einer Radialkomponente bezüglich der Ausrückachse 14 erzeugt.

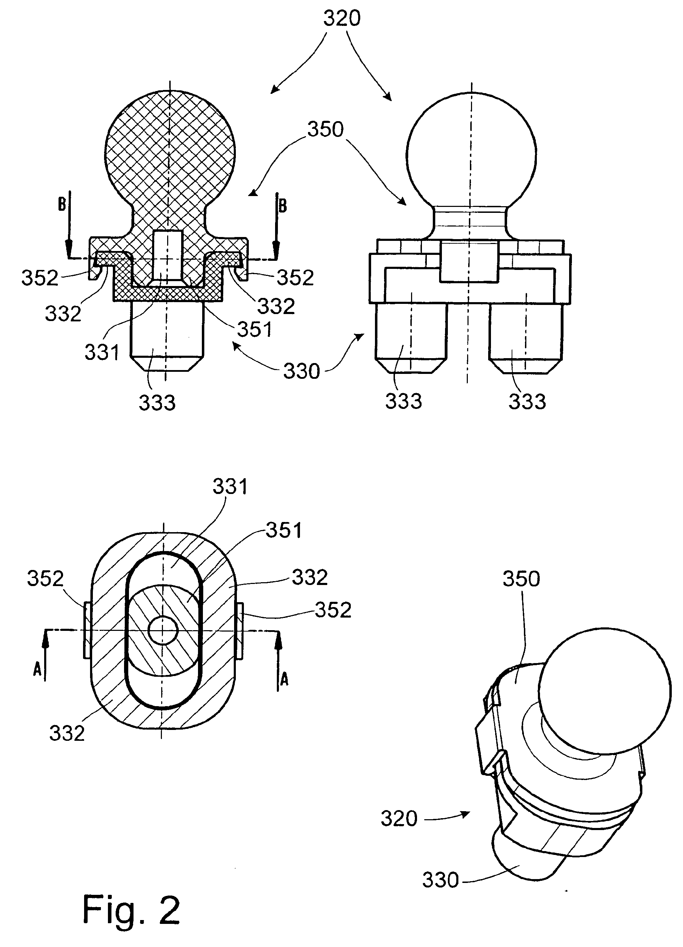

Eine erste Variante zur Darstellung des Ausgleichsmittels 38a sieht vor, das erste Lagerelement, d.h. den Kugelkopf 32, radial verlagerbar an dem Getriebegehäuse 34 anzuordnen. Dazu ist gemäß Fig. 2 ein zweiteiliger Kugelkopf 320 vorgesehen, der einen Sockel 330 zur Festlegung im Getriebegehäuse 34 und ein Kopfteil 350 zur Anlage in der Gelenkpfanne 36 aufweist. Der Sockel 330 umfasst eine Führungsnut 331 in Form eines Langloches, in welche ein an den Parallelseiten anliegender, jedoch in Längsrichtung kürzerer Fortsatz 351 des Kopfteils 350 eingreift und dort längsverschieblich geführt ist. Zur leichten Montage des Kugelkopfs 320 und der Ausrückeinrichtung 10 am Fahrzeug sind die parallelen Randbereiche des Langlochs 331 mit beidseitigen Randstegen 332 versehen, welche von zwei am Kopfteil 350 abstehenden Rasthaken 352 umgriffen werden, wodurch das Kopfteil 350 und der Sockel 330 unverlierbar miteinander verbunden sind. Der Sockel 330 wird am Getriebegehäuse 34 so angeordnet, dass das Langloch 331 radial zur Ausrückachse 14 ausgerichtet ist. Dazu weist der Sockel 330 zwei bolzenförmige Verbindungsbereiche 333 auf, die in entsprechende Ausnehmungen im Getriebegehäuse 34 eingepresst werden.

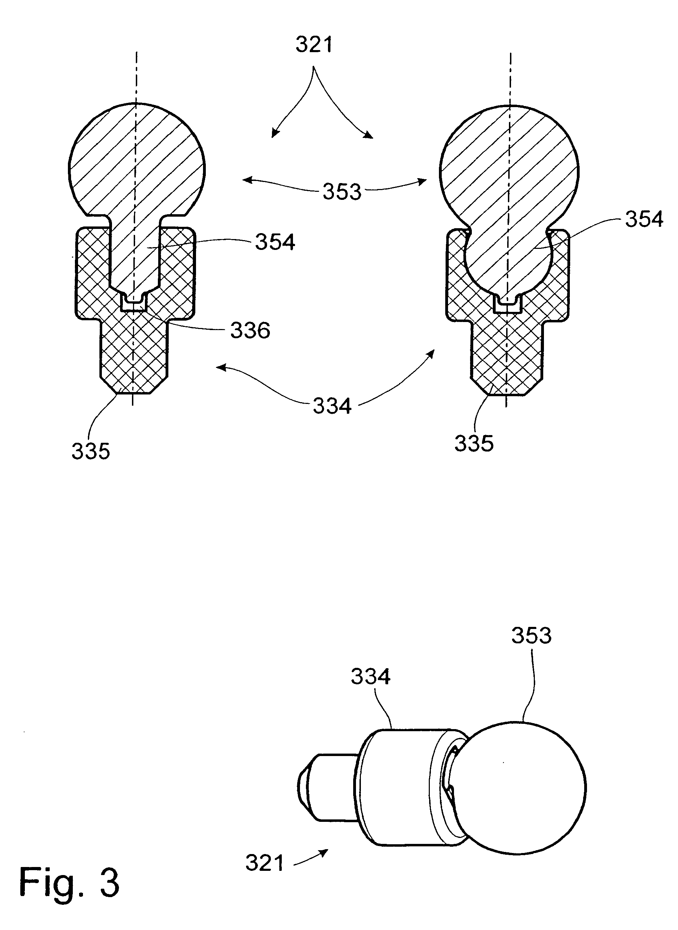

Alternativ zu Fig. 2 kann ein Kopfteil auch verschwenkbar an einem Sockel gelagert werden, wie dieses beispielhaft in Fig. 3 dargestellt ist. Der Kugelkopf 321 umfasst dazu einen Sockel 334 mit einem bolzenförmigen Verbindungsbereich 335 zur Verbindung mit dem Getriebegehäuse 34 und ein Kopfteil 353 mit einem kreisscheibenförmigen Fortsatz 354, welcher von einer dazu korrespondierenden Ausnehmung 336 des Sockels 334 aufgenommen wird und dort innerhalb eines begrenzten Bereiches in einer Ebene verschwenkbar gelagert ist.

Gemäß einer zweiten Variante wird ein Ausgleichsmittel 38b durch ein am Kupplungshebel 22 verlagerbares zweites Lagerelement, d.h. durch eine am Kupplungshebel 22 in dessen Längsrichtung verschiebbare Kugelpfanne 36 gebildet.

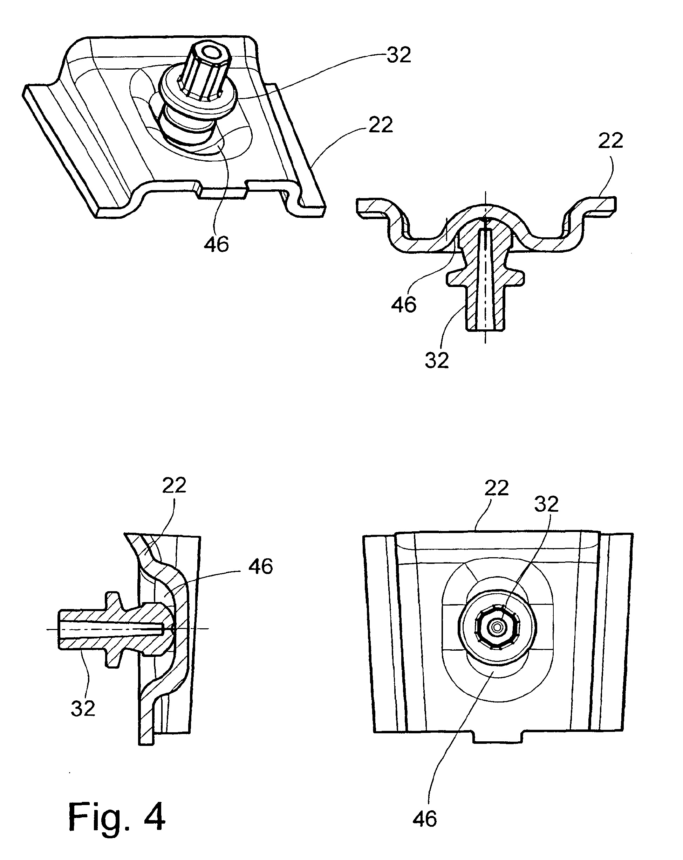

In einer dritten Variante sind zur Bildung eines Ausgleichsmittels 38c das erste und das zweite Lagerelement, d.h. der Kugelkopf 32 und die Kugelpfanne 36 zueinander verschiebbar angeordnet, indem, wie dieses anhand verschiedener Ansichten in Fig. 4 gezeigt ist, an einem z.B. als Tiefziehteil aus Stahlblech geformten Kupplungshebel 22 anstelle einer üblichen sphärischen Kugelpfanne eine sich in Längsrichtung des Kupplungshebels 22, also am Fahrzeug radial zur Ausrückachse 14 erstreckende Längskalotte 46 ausgebildet wird, in welcher ein fest am Fahrzeug montierter Kugelkopf 32 anliegt.

In einer vierten beispielhaften Variante kann als Ausgleichsmittel 38d ebenso ein längenvariabler Kupplungshebel 22 aus mindestens zwei teleskopförmig angeordneten Elementen vorgesehen sein, womit die zwischen dem Kugelgelenk 24 und der Anlageposition am Ausrücker 18 wirkende Hebellänge variiert werden kann.

Zur sicheren Aktivierung der beschriebenen Ausgleichsmittel 38a-d ist es von Vorteil, die Anlageflächen von Kupplungshebel 22 und Ausrücker 18 als Kugelgelenk 40 mit einer Kugelpfanne 42 und einem Kugelkopfsegment 44 auszuführen, wodurch der Kraftübertagungsbereich des Kupplungshebels 22 radial abgestützt an der Anlageposition des Ausrückers 18 gehalten wird. Alternativ zur Figur kann das Kugelkopfsegment 44 ebenso am Ausrücker 18 und die Kugelpfanne 42 am Kupplungshebel 22 angeordnet werden.

Gemäß einer fünften alternativen Variante zur Bereitstellung eines Ausgleichsmittels (38e) weist der Kupplungshebel (22) ein verlagerbares Element zur Anlage am Ausrücker (18) auf. Dazu kann bspw. das Kugelkopfsegment (44) oder bei vertauschter Anordnung der Wirkpartner die Kugelpfanne (42) gleitbeweglich am Kupplungshebel geführt bzw. gelagert werden.

## Patentansprüche

1. Ausrückeinrichtung (10) für eine Kraftfahrzeugkupplung (12), umfassend
- einen axial, entlang einer Ausrückachse (14) verschiebbaren Ausrücker (18), der zur Übertragung einer Kupplungsbetätigungskraft mit einem Ausrückorgan (20) der Kupplung (12) in Wirkverbindung steht,
- einen um eine Lagerstelle (24) schwenkbar gelagerten Kupplungshebel (22), welcher
- einen Kraftaufnahmebereich (26) zur Aufnahme der Kupplungsbetätigungskraft von einem Stellglied (28) und
- einen Kraftübertragungsbereich (44) aufweist, der sich zur Übertragung der Kupplungsbetätigungskraft mit dem Ausrücker (18) an einer Anlageposition (19) in Wirkverbindung befindet, wobei
- die Lagerstelle (24) ein erstes Lagerelement (32) an einer zu der Ausrückeinrichtung (10) ortsfesten Baugruppe (34) und ein zweites Lagerelement (36) am Kupplungshebel (22) aufweist, und wobei
- dem Kupplungshebel (22) Ausgleichsmittel (38) zugeordnet sind, die eine Ausgleichsbewegung mit mindestens einer Radialkomponente bezüglich der Ausrückachse (14) erzeugen, um während einer Verschwenkbewegung des Kupplungshebels (22) die radiale Lage der Anlageposition (19) am Ausrücker (18) beizubehalten,
**dadurch gekennzeichnet,**
**dass** zur Darstellung des Ausgleichsmittels (38b, c) das zweite Lagerelement (36) verlagerbar am Kupplungshebel (22) angeordnet ist oder das erste und das zweite Lagerelement (32, 36) zueinander verschiebbar angeordnet sind oder dass als Ausgleichsmittel (38d) ein längenvariabler Kupplungshebel (22) vorgesehen ist.

2. Ausrückeinrichtung nach Anspruch 1,
**dadurch gekennzeichnet,**
**dass** der Kupplungshebel (22) mit dessen Kraftübertagungsbereich (44) radial abgestützt an der Anlageposition des Ausrückers (18) angeordnet ist.

## Claims

1. Actuating device (10) for a motor-vehicle clutch (12), comprising
- a clutch operator (18) which can be displaced axially along an actuating axis (14) and is operatively connected to an actuating member (20) of the clutch (12) in order to transmit a clutch actuating force,
- a clutch lever (22) which is mounted such that it can pivot about a bearing point (22), and
- has a force absorption region (26) for absorbing the clutch actuating force from an actuating element (28) and
- a force transmission region (44) which is situated in an operative connection with the clutch operator (18) at a contact position (19) in order to transmit the clutch actuating force,
- the bearing point (24) having a first bearing element (32) on an assembly (34) which is stationary with respect to the actuating device (10) and having a second bearing element (36) on the clutch lever (22), and
- the clutch lever (22) being assigned compensating means (38) which generate a compensating movement having at least one radial component with regard to the actuating axis (14), in order to retain the radial position of the contact position (19) on the clutch operator (18) during a pivoting movement of the clutch lever (22),
**characterized**
**in that**, in order to form the compensating means (38b, c), the second bearing element (36) is arranged displaceably on the clutch lever (22) or the first and the second bearing elements (32, 36) are arranged displaceably with respect to one another, or in that a variable-length clutch lever (22) is provided as compensating means (38d).

2. Actuating device according to Claim 1, **characterized in that** the clutch lever (22) is arranged with its force transmission region (44) in a radially supported manner on the contact position of the clutch operator (18).

## Revendications

1. Mécanisme d'actionnement (10) pour un embrayage de véhicule (12), comprenant
- un dispositif de débrayage (18) coulissant axialement le long d'un axe de débrayage (14), qui est en liaison active avec un organe de débrayage (20) de l'embrayage (12) pour la transmission d'une force d'actionnement de l'embrayage,
- un levier d'embrayage (22) pivotant autour d'un point d'appui (24), qui comprend
- une zone de réception de force (26) pour recevoir la force d'actionnement de l'embrayage depuis un organe de commande (28), et
- une zone de transmission de force (44), qui se trouve en liaison active avec le dispositif de débrayage (18) dans une position d'application (19) pour la transmission de la force d'actionnement de l'embrayage, dans lequel
- le point d'appui (24) comprend un premier élément de palier (32) sur un groupe structurel (34) fixe par rapport au mécanisme d'actionnement (10) et un deuxième élément de palier (36) sur le levier d'embrayage (22), et dans lequel
- des moyens de compensation (38) sont associés au levier d'embrayage (22), pour produire un mouvement de compensation avec au moins une composante radiale par rapport à l'axe de débrayage (14), de manière à conserver la position radiale de la position d'application (19) sur le dispositif de débrayage (18) pendant un mouvement de pivotement du levier d'embrayage (22),
**caractérisé en ce que**
- pour la réalisation du moyen de compensation (38b, c), le deuxième élément de palier (36) est déplaçable sur le levier d'embrayage (22) ou le premier et le deuxième éléments de palier (32, 36) sont déplaçables l'un par rapport à l'autre ou **en ce qu'**il est prévu un levier d'embrayage (22) de longueur variable comme moyen de compensation (38d).

2. Mécanisme d'actionnement selon la revendication 1, **caractérisé en ce que** le levier d'embrayage (22) est appuyé radialement avec sa zone de transmission de force (44) sur la position d'application du dispositif d'embrayage (18).
